Europäisches Patentamt

European Patent Office

Office européen des brevets

(19)

(11) **EP 0 813 282 B1**

(12) **FASCICULE DE BREVET EUROPEEN**

(45) Date de publication et mention
de la délivrance du brevet:
**10.12.2003 Bulletin 2003/50**

(51) Int Cl.⁷: **H02H 1/04**, H02H 1/00

(21) Numéro de dépôt: **97401332.8**

(22) Date de dépôt: **12.06.1997**

(54) **Appareil de détection de défaut d'isolement d'un dispositif branché dans un réseau de distribution ou de transport d'énergie électrique et procédé de détection correspondant**

Erdschlussüberwachungsvorrichtung für eine an ein Engergieversorgungs- oder Leistungsübertragungsnetz angeschlossene Einrichtung und Verfahren dafür

Ground fault detection apparatus for a device connected to a power distribution or transmission network, and corresponding method

(84) Etats contractants désignés:
**AT BE CH DE DK ES FI FR GB GR IE IT LI LU MC NL PT SE**
Etats d'extension désignés:
**AL LT LV RO SI**

(30) Priorité: **14.06.1996  FR 9607458**

(43) Date de publication de la demande:
**17.12.1997   Bulletin 1997/51**

(73) Titulaire: **ELECTRICITE DE FRANCE**
**75008 Paris (FR)**

(72) Inventeurs:
• **Moreau, Christophe**
**77300 Fontainebleau (FR)**

• **Boisseau, Christophe**
**77780 Borron Mariotte (FR)**
• **Charpentier, Xavier**
**77670 Saint Mamet (FR)**

(74) Mandataire: **Moncheny, Michel et al**
**c/o Cabinet Lavoix**
**2 Place d'Estienne d'Orves**
**75441 Paris Cedex 09 (FR)**

(56) Documents cités:
**EP-A- 0 061 254        WO-A-91/15890**
**GB-A- 2 110 827        US-A- 5 477 150**

EP 0 813 282 B1

**Description**

La présente invention est relative à un appareil de détection de défaut d'isolement d'au moins un dispositif branché dans un réseau de distribution ou de transport d'énergie électrique et pourvu d'une ligne de mise à la terre. Elle se rapporte également à un procédé de détection mis en oeuvre dans un tel appareil.

Le document EP-A-061 254 concerne un dispositif comportant des unités de détection d'impulsions de courant sur des voies de décharge de composants. Le signe des impulsions détectées est comparé d'un composant à l'autre pour discriminer entre une décharge dans un composant et un régime transitoire ou du bruit sur le réseau.

Le document WO 91/15890 concerne quant à lui un détecteur d'arc électrique sur une ligne d'alimentation, lequel provoque une interruption de la ligne lorsqu'il a été fait la distinction entre un arc électrique et d'autres perturbations. Par conséquent, l'arc électrique y est détecté quelle que soit sa provenance, qu'il provienne de la ligne d'alimentation ou du réseau auquel celle-ci est connectée.

Les appareils de détection de ce type, connus dans l'état de la technique, comportent des moyens de mesure d'un courant de fuite se propageant dans ladite ligne de mise à la terre et susceptible de contenir au moins une décharge interne audit dispositif engendrée en présence d'un défaut d'isolement, disposés sur la ligne de mise à la terre de chaque dispositif, une unité d'acquisition du signal de mesure délivré par les moyens de mesure comprenant des moyens de conversion analogique-numérique dudit signal de mesure, et une unité de traitement de signal reliée à l'unité d'acquisition et comprenant des moyens de comparaison d'un signal numérique résultant de ladite conversion avec une valeur maximale de seuil représentative de la valeur maximale du courant de fuite autorisée à circuler dans ladite ligne de mise à la terre en vue de l'obtention, à partir de cette comparaison, d'un signal de défaut d'isolement.

De tels appareils de détection permettent la surveillance des dispositifs par analyse de décharges partielles et assurent ainsi la détection d'un éventuel vieillissement de l'isolation interne des dispositifs.

Ces appareils sont particulièrement adaptés à la surveillance des transformateurs de courant ou de tension des réseaux de distribution ou de transport d'énergie électrique.

Toutefois, les appareils de ce type présentent de nombreux inconvénients, notamment en raison du fait qu'ils ne sont pas capables de distinguer efficacement les décharges engendrées par le réseau en particulier par effet couronne et les décharges engendrées en présence d'un défaut d'isolement. Ils sont donc susceptible de générer de fausses alarmes.

Le but de l'invention est de pallier cet inconvénient.

Elle a donc pour objet un appareil de détection de défaut d'isolement du type précité, caractérisé en ce que lesdits signaux de mesure délivrés par les moyens de mesure étant constitués d'un signal utile engendré en présence d'un défaut d'isolement interne aux dispositifs et d'un signal de perturbation engendré par ledit réseau, l'unité de traitement comporte des moyens de discrimination, dans ledit signal de défaut d'isolement, entre une composante du signal utile et une composante du signal de perturbation.

L'invention peut en outre comporter une ou plusieurs caractéristiques suivantes :

- l'unité de traitement comporte en outre des moyens d'augmentation, dans le signal de mesure, du rapport signal/bruit par soustraction spectrale dudit signal de mesure et dudit signal de perturbation ;
- l'unité d'acquisition de signaux comporte des moyens d'échantillonnage des signaux de mesure à une fréquence au moins égale à 20 MHz ;
- l'unité de traitement de signaux comporte en outre un filtre numérique à réponse impulsionnelle finie d'élimination de la composante basse fréquence du signal numérique résultant de la conversion dudit signal de mesure, à déphasage linéaire ;
- les moyens de discrimination entre ladite composante du signal utile et ladite composante du signal de perturbation comportent, stocké dans ladite unité de traitement de signaux, un algorithme de discrimination entre lesdites composantes par analyse d'un facteur de couplage électromagnétique entre les phases du réseau de distribution ou de transport ;
- les moyens de discrimination entre ladite composante du signal utile et ladite composante du signal de perturbation comportent, stocké dans l'unité de traitement de signaux, un algorithme de discrimination entre lesdites composantes par élimination, dans ledit signal de défaut d'isolement, d'au moins une zone correspondant à une crête de la tension du réseau de distribution ou de transport;
- les moyens de discrimination entre ladite composante du signal utile et ladite composante du signal de perturbation comportent, stocké dans l'unité de traitement, un algorithme de discrimination entre lesdites composantes par analyse de la différence entre le signe de la pente du signal de défaut d'isolement et la polarité de la tension du réseau de distribution ou de transport.

L'invention a également pour objet un procédé de détection de défaut d'isolement mis en oeuvre dans l'appareil de détection défini ci-dessus, dans lequel on mesure le courant de fuite se propageant dans la ligne de mise à la terre et susceptible de contenir au moins une décharge interne audit dispositif engendrée en présence d'un défaut d'isolement, on convertit le signal analogique de mesure du courant de fuite en un signal numérique de mesure, on compare le signal numérique de mesure avec une valeur de seuil représentative de la valeur maximale du courant de fuite autorisée à circuler dans ladite ligne de mise à la terre et on engendre un signal de défaut d'isolement lorsque le signal numérique de mesure est supérieur à ladite valeur de seuil, caractérisé en ce que le signal de mesure étant constitué d'un signal utile engendré en présence d'un défaut d'isolement interne au dispositif et d'un signal de perturbation engendré par ledit réseau, il comporte en outre une étape de discrimination du signal de défaut d'isolement entre une composante du signal utile et une composante du signal de perturbation postérieure à l'étape consistant à engendrer le signal de défaut d'isolement.

D'autres caractéristiques et avantages ressortiront de la description suivante, donnée uniquement à titre d'exemple et faite en référence aux dessins annexés sur lesquels :

- la figure 1 est un schéma synoptique de l'appareil de détection selon l'invention ;
- la figure 2 est un schéma synoptique de l'unité d'acquisition ; et
- la figure 3 est un schéma synoptique d'une partie de l'unité de traitement assurant l'augmentation du rapport signal/ bruit.

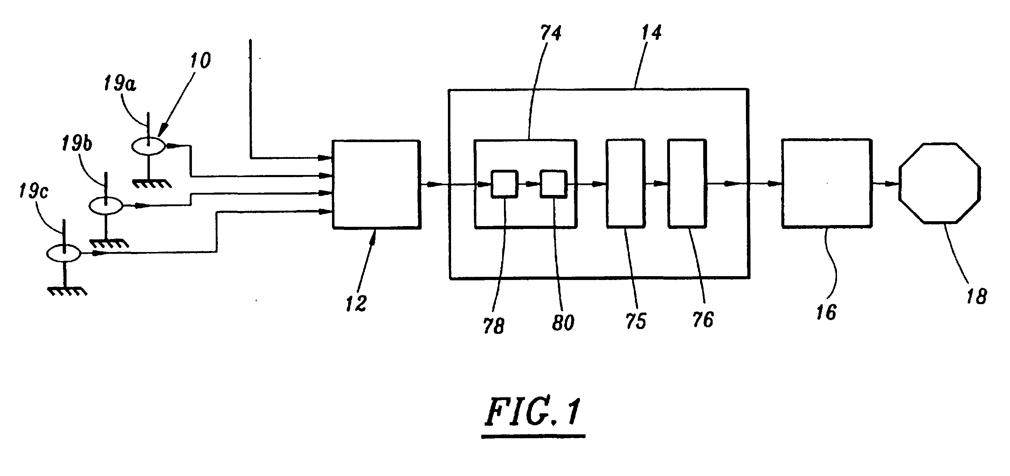

Sur la figure 1 on a représenté un schéma synoptique d'un appareil de détection de défaut d'isolement selon l'invention.

Cet appareil est destiné à assurer la détection de défauts d'isolement se produisant dans des transformateurs de tension ou de courant équipant un réseau de distribution ou de transport d'énergie électrique et non représenté sur cette figure 1.

La description de l'invention qui va suivre s'applique à la détection de défauts d'isolement apparaissant dans de tels transformateurs, mais bien entendu l'invention s'applique également à la détection de défauts d'isolement se produisant dans d'autres types de dispositifs électriques branchés dans le réseau et pourvus d'une ligne de mise à la terre.

L'appareil comporte des moyens de mesure 10 du courant de fuite engendré en présence d'un défaut d'isolement, une unité de réception-acquisition 12 du signal de mesure délivré par les moyens de mesure 10 et une unité de traitement 14 reliée à l'unité d'acquisition 12 et assurant la détection des décharges internes aux transformateurs pour en surveiller l'isolement.

L'unité de traitement 14 est reliée à un organe de visualisation 16 des défauts d'isolement détectés et à un générateur de signaux d'alarme 18, tous deux de type connu.

Les moyens de mesure 10 du courant de fuite sont constitués par des capteurs de courant à haute fréquence, par exemple des transformateurs de courant installés dans la ligne de mise à la terre, respectivement 19a,19b et 19c, des transformateurs à surveiller.

Sur la figure 1 les transformateurs n'ont pas été représentés, seule leur ligne de mise à la terre 19a,19b et 19c ayant été schématiquement représentée.

On voit sur cette figure 1 que trois transformateurs sont surveillés simultanément.

Les capteurs utilisés ont une bande passante se situant de préférence entre 400 kHz et 90 Mhz. Ils ont une structure de type connu. Ils ne seront donc pas décrits en détail par la suite. On notera toutefois que ces capteurs sont adaptés pour l'utilisation envisagée, et sont donc capables d'être installés sur la ligne de mise à la terre de chaque transformateur sans modification de cette ligne.

Ils délivrent à l'unité 12 d'acquisition un signal de mesure du courant de fuite se propageant dans la ligne de mise à la terre et susceptible de contenir une ou des décharges partielles internes au transformateur, engendrée par un défaut d'isolement interne de celui-ci.

L'unité d'acquisition 12 reçoit, en entrée, le courant de mesure à hautes fréquences provenant des capteurs, à une fréquence par exemple de l'ordre de quelques dizaines de kHz à quelques MHz et sur une période complète de 50 Hz. Cette unité 12 assure une conversion numérique-analogique des courants hautes fréquences en vue de la formation d'échantillons numériques, par exemple d'un nombre de 400000 points par capteur et par période de 50 Hz.

Simultanément à l'acquisition du signal de mesure délivré par les trois capteurs 10, l'unité d'acquisition 12 reçoit en entrée un signal V de mesure de la tension instantanée du réseau, la valeur de cette tension V servant de référence pour l'unité de traitement 14 en vue de la discrimination entre les décharges internes engendrées en présence du défaut d'isolement et les décharges externes parasitaires engendrées en particulier par effet couronne.

Ce signal V de mesure est fourni par un organe de mesure classique.

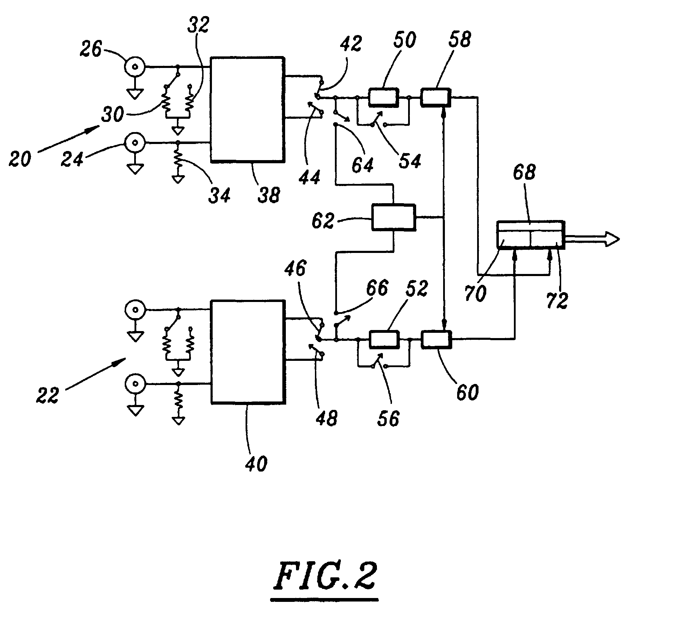

La description de l'unité d'acquisition 12 va maintenant être faite en référence à la figure 2.

L'unité d'acquisition 12 comporte deux cartes identiques ayant chacune la structure représentée sur la figure 2.

Le circuit représenté sur cette figure comporte deux voies d'entrée, respectivement 20 et 22, pour l'acquisition du signal de mesure délivré par les capteurs 10 de mesure et du signal V de mesure de la tension du réseau.

Les deux voies d'entrée 20 et 22 de l'une des cartes sont reliées à deux capteurs de mesure 10, tandis que l'une des voies d'entrée de la deuxième carte est reliée au troisième capteur de mesure, la deuxième entrée étant reliée à l'organe de mesure de la tension du réseau.

Chaque voie d'entrée 20 et 22 comporte deux bornes d'entrée, telles que 24 et 26, l'une, par exemple 24, étant destinée à être connectée à l'organe de mesure de la tension du réseau, l'autre, 26, étant destinées à être connectées chacune à un capteur de mesure 10 correspondant.

Lorsqu'une des voies d'entrée 20 et 22 est reliée à un capteur de mesure 10 du courant de fuite, la borne d'entrée 24 correspondante et destinée à recevoir le signal V n'est pas connectée.

Lorsque cette voie d'entrée 20 est reliée à l'organe de mesure de la tension V du réseau, l'autre borne 26 correspondante et destinée à recevoir le signal de mesure du courant de fuite, n'est pas connectée.

Les bornes d'entrée 24,26 sont connectées, par l'intermédiaire de résistances d'entrée 30,32 et 34 à un circuit atténuateur, 38 et 40, de type classique.

La sortie de chaque circuit atténuateur 38 et 40 est reliée, par l'intermédiaire de deux commutateurs, respectivement 42,44 et 46,48, à un circuit de filtrage de bruit 50 et 52, de fréquence de coupure voisine de 10 MHz.

Les commutateurs 42,44 et 46, 48 assurent la sélection du mode d'acquisition des signaux, à savoir la sélection entre un mode d'acquisition du signal V de mesure de la tension instantanée du réseau et un mode d'acquisition du signal de mesure délivré par les capteurs 10.

Il est à noter que les circuits de filtrage 50 et 52 peuvent être court-circuités par des commutateurs 54 et 56 correspondants.

Chaque sortie des circuits de filtrage 50 et 52 est reliée à un convertisseur analogique-numérique, respectivement 58 et 60, assurant chacun la conversion des signaux de mesure en un signal numérique correspondant.

Ce circuit est complété par un organe déclencheur 62 relié d'une part, par l'intermédiaire de deux commutateurs correspondants 64 et 66, à l'entrée des circuits de filtrage 50 et 52 et, d'autre part, aux convertisseurs 58 et 60.

L'organe déclencheur 62 provoque la conversion des signaux de mesure, réalisée dans les circuits convertisseurs analogiques-numériques 58 et 60, lorsque la valeur instantanée de la tension du réseau est égale à une valeur particulière et prédéfinie, par exemple 0 V. Cette conversion s'effectue à une fréquence égale à au moins 20 MHz permettant, sous la commande de l'organe déclencheur 62 l'échantillonnage des signaux de mesure avec un grand nombre points, au moins égal à 400000, ce nombre de points d'échantillonnage permettant d'obtenir un signal échantillonné reproduisant fidèlement le signal de mesure incident, permettant ainsi une analyse dans l'unité de traitement 14 très efficace.

Le signal échantillonné est ensuite stocké dans une mémoire RAM 68, constituée par l'assemblage de deux cellules de mémoire 70 et 72 de capacité chacune égale par exemple à 512 Ko, et reliée à l'unité de traitement 14 (figure 1).

Ainsi, le signal échantillonné constitué d'un ensemble de blocs de 400000 points et mémorisé dans la mémoire RAM 68 est délivré à l'unité de traitement 14.

En se référant à nouveau à la figure 1, l'unité de traitement 14 comporte un circuit de filtrage 74 relié à l'unité d'acquisition 12 recevant le signal échantillonné extrait de la mémoire RAM 68, un circuit de comparaison 75 du signal échantillonné filtré par le circuit de filtrage 74 avec une valeur de seuil représentative de la valeur maximale du courant de fuite autorisé à circuler dans les lignes 19a,19b et 19c de mise à la terre, et un circuit de discrimination 76 placé en sortie du circuit de filtrage 74.

Le circuit de filtrage 74 comporte un premier circuit de filtrage 78 d'élimination de la composante basse fréquence du signal de mesure échantillonné et un deuxième circuit de filtrage 80 d'augmentation du rapport signal/bruit dans le signal de mesure échantillonné.

Le premier circuit de filtrage 78 est constitué par un filtre numérique à réponse impulsionnelle finie et à déphasage linéaire, de type classique. Il est réalisé à partir d'un algorithme stocké dans un calculateur et permet l'élimination de la composante continue du signal de mesure sans modification de la phase du signal de mesure.

Le deuxième circuit de filtrage 80 est lui aussi constitué par un filtre réalisé sous forme logicielle. Il comporte un algorithme de soustraction spectrale du bruit présent dans le signal de mesure échantillonné.

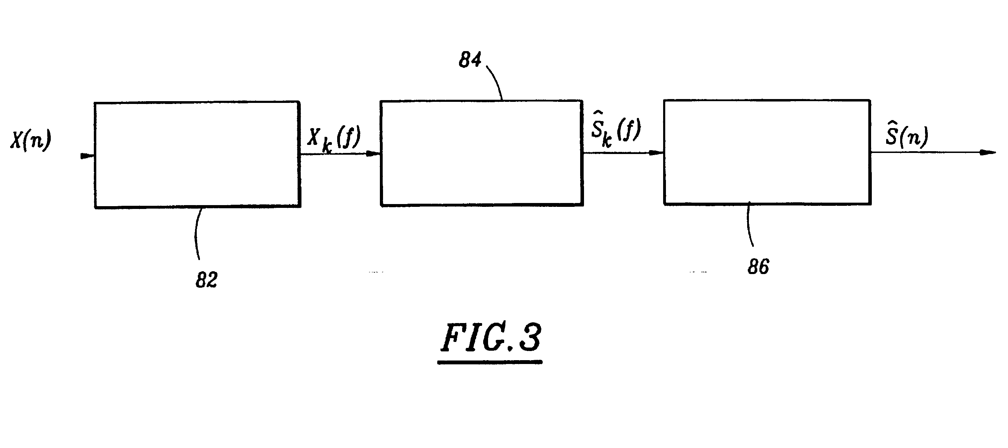

En se référant à la figure 3, on voit que l'algorithme de soustraction spectrale du bruit comporte une première phase 82 réalisant une transformée de Fourrier rapide du signal de mesure échantillonné $X(n)$ en vue de la conversion de ce signal en un signal fréquentiel $X_k(f)$. Ce signal $X_k(f)$ satisfait à la relation suivante :

$$X_k(f) = S_k(f) + B_k(f), \qquad (1)$$

dans laquelle,

k est le numéro d'un sous-bloc d'échantillonnage d'une taille de 256 points, chaque sous-bloc ayant environ un taux de recouvrement entre sous-blocs de 1/2.

$S_k(f)$ est un signal fréquentiel utile engendré par des décharges internes au transformateur, et

$B_k(f)$ est un signal de bruit correspondant à un signal fréquentiel de perturbation $S_k(f)$ engendré par des décharges externes provoquées en particulier par effet couronne.

Dans la phase 84 suivante le signal de bruit $\hat{B}_k(f)$ est estimé selon la relation suivante :

$$|\hat{B}_k(f)| = \frac{1-\lambda}{1-\lambda^k} \sum_{p=1}^{k} \lambda^{k-p} |X_p(f)| \qquad (2)$$

pour k > 0 et,

$|B_o(f)| = 0$

pour k=0,

dans laquelle $\lambda$ est le facteur d'oubli, compris entre 0 et 1.

Le signal estimé du bruit $B_k(f)$ est soustrait, dans cette phase 84 au signal de mesure $X_k(f)$ selon la relation suivante:

$$\hat{S}_k(f) = X_k(f) - \hat{B}_k(f) \qquad (3)$$

dans laquelle $\hat{S}_k(f)$ désigne le signal spectrale résultant de la soustraction spectrale.

Le signal $S_k(f)$ subit ensuite, dans la phase suivante 86, une transformée de Fourrier rapide inverse pour délivrer au circuit de comparaison 75 un signal S(n) ayant subi un gain en rapport signal/bruit d'environ 6 dB.

Le circuit de comparaison 75 calcule, comme décrit précédement, la différence entre le signal S(n) et une valeur de seuil représentative de la valeur maximale du courant de fuite autorisée à circuler dans les lignes de mise à la terre 19a,19b et 19c des transformateurs.

Le seuil utilisé est de préférence calculé à partir de l'écart type du signal échantillonné. Il est par exemple égal à dix fois cet écart type.

Ce circuit de comparaison 75 délivre ainsi au circuit de discrimination 76 un signal représentant le courant dans la mise à la terre d'un transformateur pour lequel il aura été détecté ou non que le seuil est franchi, un ou plusieurs signaux de défaut d'isolement comportant une composante utile engendrée par les décharges internes et une composante de perturbation de la composante utile engendrée par les décharges externes.

Le circuit de discrimination 76 assure la discrimination entre ces composantes pour éliminer, du signal de détection de défaut d'isolement, la composante engendrée par les décharges externes.

Le circuit de discrimination 76 est constitué par un calculateur dans lequel sont stockés trois algorithmes de discrimination appliqués successivement et dans un ordre quelconque, au signal de défaut d'isolement.

Le premier algorithme de discrimination effectue la discrimination entre les composantes du signal de défaut d'isolement à partir de l'analyse du facteur de couplage électromagnétique entre les phases du réseau.

En effet, il est connu, qu'au retard de transmission près, une décharge détectée sur une des phases, engendre une décharge sur les autres phases.

Par ailleurs, des résultats expérimentaux montrent que le couplage entre les phases dépend de la nature de la décharge et de la configuration géométrique du réseau. Ces résultats expérimentaux montrent que le facteur de couplage, à savoir le facteur d'atténuation, correspondant à une décharge externe, est inférieur au facteur de couplage correspondant à une décharge interne.

Dès lors, le premier algorithme de discrimination effectue un calcul du facteur de couplage entre les phases et compare ce facteur de couplage avec des valeurs correspondantes expérimentales en vue de la discrimination entre la composante du signal utile engendrée en présence d'un défaut d'isolement et la composante de perturbation engendrée en particulier par effet couronne.

Ainsi, la composante du signal de perturbation est éliminée.

Le deuxième algorithme de discrimination examine le signe de la pente de la tension de référence et la polarité dudit signal de défaut d'isolement.

En effet, si la polarité d'une décharge est de même signe que la pente de la tension de référence, pour une même phase, cette décharge est une décharge interne. Dans le cas contraire, cette décharge est une décharge externe.

Le deuxième algorithme de discrimination utilise ce principe et assure la comparaison entre la polarité du signal de défaut d'isolement et la pente de la tension V de référence. Il élimine ainsi la composante du signal de défaut d'isolement dont la polarité est différente du signe de la pente de la tension de référence.

Enfin, le troisième algorithme de discrimination réalise un filtrage par fenêtrage du signal de défaut d'isolement. En effet, l'expérimentation montre que l'activité de l'effet couronne se situe au voisinage des crêtes de la tension V instantanée fournie par le réseau de distribution ou de transport d'énergie électrique.

Ainsi, selon cet algorithme de discrimination, la tension V de référence est en permanence surveillée et les points d'échantillonnage se situant au voisinage des crêtes de tension sont éliminés.

Il est à noter que la largeur de la bande d'élimination est paramétrée en fonction du niveau de tension de l'appareil à surveiller.

On conçoit que l'appareil de détection de défaut d'isolement qui vient d'être décrit permet la surveillance du vieillissement des transformateurs de tension ou de courant branchés dans un réseau de distribution ou de transport d'énergie électrique, sans modification de la ligne de mise à la terre de ces transformateurs.

Elle permet en outre d'éliminer les fausses alarmes engendrées en particulier par effet couronne, ce qui permet d'optimiser l'intervention des équipes de maintenance.

**Revendications**

**1.** Appareil de détection de défaut d'isolement d'au moins un dispositif branché dans un réseau de distribution ou de transport d'énergie électrique et pourvu d'une ligne (19a,19b,19c) de mise à la terre, comprenant des moyens de mesure (10) d'un courant de fuite se propageant dans ladite ligne (19,19b,19c) de mise à la terre et susceptible de contenir au moins une décharge interne audit dispositif engendrée en présence d'un défaut d'isolement, disposés sur la ligne de mise à la terre (19a,19b,19c) de chaque dispositif, une unité d'acquisition (12) du signal de mesure délivré par les moyens de mesure (10) comportant des moyens de conversion analogique-numérique (58,60) dudit signal de mesure, et une unité de traitement (14) de signal reliée à l'unité d'acquisition (12) et comportant des moyens de comparaison (75) d'un signal numérique résultant de ladite conversion avec une valeur maximale de seuil représentative de la valeur maximale du courant de fuite autorisée à circuler dans ladite ligne de mise à la terre, en vue de l'obtention, à partir de cette comparaison, d'un signal de défaut d'isolement, **caractérisé en ce que** ledit signal de mesure délivré par les moyens de mesure étant constitué d'un signal utile ($S_k(f)$) engendré en présence d'un défaut d'isolement interne auxdits dispositifs et d'un signal de perturbation ($B_k(f)$), engendré par ledit réseau, l'unité de traitement (14) comporte des moyens de discrimination (76), dans ledit signal de défaut d'isolement, entre une composante du signal utile ($S_k(f)$) et une composante du signal de perturbation ($B_k(f)$), les moyens de discrimination (76) entre ladite composante du signal utile ($S_k(f)$) et ladite composante du signal de perturbation ($B_k(f)$) comportant, stocké dans ladite unité de traitement (14), un algorithme de discrimination entre lesdites composantes par analyse d'un facteur de couplage électromagnétique entre les phase du réseau de distribution ou de transport, un algorithme de discrimination entre lesdites composantes par élimination, dans ledit signal de défaut d'isolement, d'au moins une zone correspondant à une crête de tension (V) du réseau de distribution ou de transport, un algorithme de discrimination entre lesdites composantes par analyse de la différence entre la polarité du signal de défaut d'isolement et le signe de la pente de la tension (V) du réseau de distribution ou de transport.

**2.** Appareil selon la revendication 1, **caractérisé en ce que** ladite unité de traitement (14) comporte en outre des moyens d'augmentation (80), dans le signal de mesure, du rapport signal/bruit par soustraction spectrale dudit signal de mesure et d'une estimation dudit signal de perturbation ($B_k(f)$), selon la relation suivante :

$$\hat{S}_k(f) = X_k(f) - \hat{B}_k(f),$$

dans laquelle $\hat{S}_k(f)$ désigne le signal spectral résultant de la soustraction spectrale, $X_k(f)$ est le signal fréquentiel obtenu par transformée de Fourier rapide du signal de mesure échantillonné et $B_k(f)$ est le signal de bruit estimé selon la relation suivante :

$$\left| \hat{B}_k(f) \right| = \frac{1-\lambda}{1-\lambda^k} \sum_{p=1}^{k} \lambda^{k-p} \left| X_p(f) \right|$$

pour k > 0 et,

$$|\hat{B}_o(f)| = 0$$

pour k=0,
dans laquelle $\lambda$ est un facteur d'oubli, compris entre 0 et 1.

3. Appareil selon l'une des revendications 1 et 2, **caractérisé en ce que** l'unité d'acquisition (12) comporte des moyens d'échantillonnage (58,60) du signal de mesure à une fréquence au moins égale à 20 MHz.

4. Appareil selon l'une quelconque des revendications 1 à 3, **caractérisé en ce que** l'unité de traitement (14) comporte en outre un filtre numérique (78) à réponse impulsionnelle finie d'élimination de la composante basse fréquence dudit signal numérique résultant de la conversion dudit signal de mesure.

5. Appareil selon la revendication 4, **caractérisé en ce que** ledit filtre numérique (78) à réponse impulsionnelle finie est un filtre numérique à déphasage linéaire.

6. Procédé de détection de défaut d'isolement d'au moins un dispositif branché dans un réseau de distribution ou de transport d'énergie électrique et pourvu d'une ligne (19a,19b,19c) de mise à la terre, dans lequel on mesure un courant de fuite se propageant dans ladite ligne (19a,19b,19c) de mise à la terre et susceptible de contenir au moins une décharge interne audit dispositif engendrée en présence d'un défaut d'isolement, on convertit le signal analogique de mesure du courant de fuite en un signal numérique de mesure, on compare le signal numérique de mesure avec une valeur de seuil représentative de la valeur maximale du courant de fuite autorisée à circuler dans ladite ligne (19a,19b,19c) de mise à la terre et on engendre un signal de défaut d'isolement lorsque le signal numérique de mesure est supérieur à ladite valeur de seuil, **caractérisé en ce que** le signal de mesure étant constitué d'un signal utile ($S_k(f)$) engendré en présence d'un défaut d'isolement interne auxdits dispositifs et d'un signal de perturbation ($B_k(f)$), engendré par ledit réseau, il comporte en outre une étape de discrimination du signal de défaut d'isolement entre une composante du signal utile ($S_k(f)$) et une composante du signal de perturbation ($B_k(f)$), postérieure à l'étape consistant à engendrer le signal de défaut d'isolement, ladite étape de discrimination consistant à discriminer lesdites composantes par analyse d'un facteur de couplage électromagnétique entre les phases du réseau de distribution ou de transport, à éliminer, dans ledit signal de défaut d'isolement, au moins une zone correspondant à une crête de tension (V) du réseau de distribution ou de transport, et à analyser la différence entre la polarité du signal de défaut d'isolement et le signe de la pente de la tension (V) du réseau de distribution ou de transport.

7. Procédé selon la revendication 6, **caractérisé en ce qu'**il comporte en outre une étape d'augmentation, dans le signal de mesure, du rapport signal/bruit par soustraction spectrale dudit signal de mesure et d'une estimation dudit signal de perturbation ($B_k(f)$), préalable à ladite étape de comparaison, la soustraction spectrale étant effectuée selon la relation suivante :

$$\hat{S}_k(f) = X_k(f) - \hat{B}_k(f),$$

dans laquelle $S_k(f)$ désigne le signal spectral résultant de la soustraction spectrale, $X_x(f)$ est le signal fréquentiel obtenu par transformée de Fourier rapide du signal de mesure échantillonné et $B_x(f)$ est le signal de bruit estimé selon la relation suivante :

$$|\hat{B}_k(f)| = \frac{1-\lambda}{1-\lambda^k} \sum_{p=1}^{k} \lambda^{k-p} |X_p(f)|$$

pour k > 0 et,

$$|\hat{B}_o(f)| = 0$$

pour k=0,
dans laquelle λ est un facteur d'oubli, compris entre 0 et 1.

**8.** Procédé selon l'une des revendications 6 et 7, **caractérisé en ce qu'**il comporte en outre une étape d'élimination de la composante basse fréquence du signal de mesure au moyen d'un filtre numérique (78) à réponse impulsionnelle finie et à déphasage linéaire, postérieure à ladite étape de conversion analogique-numérique.

**Patentansprüche**

**1.** Erdschlussüberwachungsvorrichtung für wenigstens eine an ein Energieversorgungs- oder Leistungsübertragungsnetz angeschlossene Einrichtung, mit einer Erdschlussleitung (19a,19b,19c), mit einer Messeinrichtung (10) für einen Verluststrom, der in der Erdschlussleitung (19a,19b,19c) fließt und wenigstens eine interne Entladung in Bezug auf die Einrichtung aufgrund eines Erdschlusses erfassen kann. welche Messeinrichtungen in der Erdschlussleitung (19a,19b,19c) jeder Einrichtung angeordnet sind. mit einer Aufnahmeeinrichtung (12) für das Mess-Signal der Messeinrichtung (10), die Mittel (58.60) zur analog-numerischen Umwandlung des Mess-Signals enthält, und einer Verarbeitungseinrichtung (14) für das an die Aufnahmeeinrichtung (12) gelangte Signal. die eine Einrichtung (75) zum Vergleichen eines aus der Umwandlung hervorgegangenen numerischen Signals mit einem Maximal-Schwellenwert. der repräsentativ ist für den Maximalwert des Verluststroms, der in der Erdschlussleitung fließen kann. mit dem Ziel, durch den Vergleich ein Erdschluss-Signal zu ermitteln, **dadurch gekennzeichnet, dass** das Mess-Signal, das abgegeben wird durch die Messeinrichtung, gebildet wird durch ein Nutz-Signal ($S_k$(f)), das abgegeben wird in Anwesenheit eines internen Erdschlusses der Einrichtung, und ein Stör-Signal ($B_k$(f)), das durch das Netz abgegeben wird, das die Behandlungseinheit (14) als Unterscheidungsmittel (76) aufweist. die in dem Erdschluss-Signal zwischen einer Nutz-Signal-Komponente ($S_k$(f)) und einer Stär-Signal-Komponente ($B_k$(f)) unterscheiden, wobei die Unterscheidungsmittel (76) zur Unterscheidung zwischen der Nutz-Signal-Komponente ($S_k$(f)) und einer Stör-Signal-Komponente ($B_k$(f)), eingespeichert innerhalb der Behandlungseinheit (14), einen Diskriminierungs-Algorithmus zur Unterscheidung zwischen den Komponenten durch Analyse eines elektromagnetischen Kopplungsfaktors zwischen den Phasen des Energieversorgungsnetzes, einen Algorithmus zur Unterscheidung zwischen den Komponenten durch Elimination in dem Erdschluss-Signal wenigstens einer Zone, die einer Spannungsspitze V des Energieversorgungsnetzes entspricht, einen Algorithmus zur Unterscheidung zwischen den Komponenten durch Analyse der Differenz zwischen der Polarität des Erdschluss-Signals und dem Vorzeichen der Steigung der Spannung V des Energieversorgungsnetzes umfassen.

**2.** Vorrichtung nach Anspruch 1, **dadurch gekennzeichnet, dass** die Behandlungseinheit (14) im übrigen eine Vergrößerungseinrichtung (18) zum Vergrößern des Verhältnisses Signal/Rauschen in dem Mess-Signal durch Spektral-Subtraktion des Mess-Signals und eine Schätzung des Stör-Signals ($B_k$(f)) gemäß der folgenden Gleichung umfaßt:

$$S_k(f) = X_k(f) - B_k(f).$$

in der $S_k$(f) das Spektral-Signal bezeichnet, das sich durch die Spektralsubtraktion ergibt. $X_k$(f) das Frequenz-Signal ist, das durch Fourier-Transformation des als Probe genommenen Mess-Signals entsteht, und $B_k$(f) das Rausch-Signal ist, das gemäß folgender Gleichung geschätzt wird:

$$|\hat{B}_k(f)| = \frac{1-\lambda}{1-\lambda^k} \sum_{p=1}^{k} \lambda^{k-p} |X_p(f)|$$

für k > 0 und,

$$|B_o(f)|=0$$

für k = 0,
wobei λ ein beliebiger Faktor zwischen 0 und 1 ist.

3. Vorrichtung nach Anspruch 1 oder 2. **dadurch gekennzeichnet, dass** die Aufnahmeeinheit (12) eine Probennahmeeinrichtung (58,60) für das Mess-Signal mit einer Frequenz von wenigstens 20 MHz umfaßt.

4. Vorrichtung nach einem der Ansprüche 1 bis 3, **dadurch gekennzeichnet, dass** die Behandlungseinheit (14) im übrigen ein numerisches Filter (78) umfaßt mit impulsartigem Ansprechverhalten zur Elimination niederfrequenter Komponenten des numerischen Signals. das sich durch Umwandlung des Mess-Signals ergibt.

5. Vorrichtung nach Anspruch 4, **dadurch gekennzeichnet, dass** das numerische Filter (78) mit impulsartigem Ansprechverhalten ein numerisches Filter mit linearer Phasenverschiebung ist.

6. Verfahren zur Erdschlussüberwachung für wenigstens eine an ein Energieversorgungs- oder Leistungsübertragungsnetz angeschlossene Einrichtung, mit einer Erdschlussleitung (19a,19b,19c), in der ein Verluststrom gemessen wird. der in der Erdschlussleitung (19a,19b,19c) fließt und wenigstens eine interne Entladung der Einrichtung enthält, die bei Erdschluss entsteht, bei welchem Verfahren das analoge Mess-Signal des Verluststroms in ein numerisches Mess-Signal umgewandelt wird, das numerische Mess-Signal mit einem repräsentativen Schwellenwert für den Maximalwert des Verluststroms verglichen wird, der in der Erdschlussleitung (19a,19b,19c) fließen kann, wobei ein Erdschluss-Signal abgegeben wird, wenn das numerische Mess-Signal größer als der besagte Schwellenwert ist, **dadurch gekennzeichnet, dass** das Mess-Signal gebildet wird aus einem Nutz-Signal ($S_k(f)$), das in Anwesenheit von Erdschluss innerhalb der Einrichtung abgegeben wird, und eines Stör-Signals ($B_k(f)$), das durch das Netz abgegeben wird. mit einem Schritt der Diskriminierung des Erdschluss-Signals in Bezug auf eine Nutz-Signal-Komponente ($S_k(f)$) und eine Stör-Signal-Komponente ($B_k(f)$) anschließend an einen Schritt, der in der Abgabe des Erdschluss-Signals besteht. welcher Schritt der Diskriminierung darin besteht. dass die Komponenten durch Analyse eines elektromagnetischen Koppelungsfaktors zwischen den Phasen des Energieversorgungsnetzes besteht, damit in dem Erdschlüss-Signal wenigstens eine Zone eliminiert wird, die einer Spannungsspitze V des Energieversorgungsnetzes entspricht, und um die Differenz zwischen der Polarität des Erdschluss-Signals und dem Vorzeichen der Steigung der Spannung V des Energieversorgungsnetzes zu analysieren.

7. Verfahren nach Anspruch 6, **dadurch gekennzeichnet, dass** das Verfahren einen Verstärkungsschritt umfaßt, bei dem im Mess-Signal das Verhältnis Signal/Rauschen durch Spektral-Subtraktion des Mess-Signals und einer Schätzung des Stör-Signals ($B_k(f)$) vergrößert wird. vor einem Schritt des Vergleichens, wobei die Spektral-Subtraktion nach folgender Gleichung erfolgt:

$$S_k(f) = X_k(f) - B_k(f),$$

in der $S_k(f)$ das Spektral-Signal bezeichnet, das durch die Spektral-Subtraktion entsteht. $X_k(f)$ ein Frequenz-Signal ist, das durch schnelle Fourrier Transformation des probenmäßig genommenen Mess-Signals ist und $B_k(f)$ das Rausch-Signal ist, das geschätzt wird nach der Gleichung:

$$|\hat{B}_k(f)| = \frac{1-\lambda}{1-\lambda^k} \sum_{p=1}^{k} \lambda^{k-p} |X_p(f)|$$

für k > 0 und,

$$|B_0(f)| = 0$$

für k = 0,
wobei $\lambda$ ein beliebiger Faktor zwischen 0 und 1 ist.

8. Verfahren nach einem der Ansprüche 6 oder 7, **dadurch gekennzeichnet, dass** im übrigen ein Schritt der Elimination der niederfrequenten Komponenten des Mess-Signals mit Hilfe eines numerischen Filters (78) vorgesehen ist, der ein impulsartiges Ansprechverhalten aufweist und mit linearer Phasenverschiebung arbeitet. anschließend an den Schritt der analog-numerischen Umwandlung.

**Claims**

1. Apparatus for detecting an insulation defect in at least one device connected into an electrical power distribution or transmission network and provided with an earthing line (19a, 19b, 19c), comprising means (10) for measuring a leakage current travelling along the said earthing line (19a, 19b, 19c) and capable of containing at least one discharge which is internal to the said device and is generated in the presence of an insulation defect, the said measuring means being disposed on the earthing line (19a, 19b, 19c) of each device, a unit (12) for capture of the measurement signal delivered by the measuring means (10) including means (58, 60) for analogue/digital conversion of the said measurement signal, and a signal processing unit (14) connected to the capture unit (12) and including means (75) for comparing a digital signal resulting from the said conversion with a maximum threshold value which is representative of the maximum value of the leakage current permitted to circulate in the said earthing line, in order on the basis of this comparison to obtain an insulation defect signal, **characterised in that** the said measurement signal delivered by the measuring means consists of a useful signal ($S_k(f)$) generated in the presence of an insulation defect internal to the said devices and of an interference signal ($B_k(f)$) generated by the said network, the processing unit (14) includes means for discriminating (76), in the insulation defect signal, between a useful signal component ($S_k(f)$) and an interference signal component ($B_k(f)$), wherein the means (76) for discriminating between the said useful signal component ($S_k(f)$) and the said interference signal component ($B_k(f)$) includes, stored in the said processing unit (14), an algorithm for discriminating between the said components by analysis of an electromagnetic coupling factor between the phases of the distribution or transmission network, an algorithm for discriminating between the said components by elimination, within the said insulation defect signal, of at least one zone corresponding to a voltage peak (V) of the distribution or transmission network, and an algorithm for discriminating between the said components by analysis of the difference between the polarity of the insulation defect signal and the sign of the voltage gradient (V) of the distribution or transmission network.

2. Apparatus as claimed in Claim 1, **characterised in that** the said processing unit (14) also includes means (80) for increasing the signal/noise ratio in the measurement signal by spectral subtraction of the said measurement signal and of an estimate of the said interference signal ($B_k(f)$), according to the following relation:

$$\hat{S}_k(f) = x_k(f) - \hat{B}_k(f),$$

in which $\hat{S}_k(f)$ designates the spectral signal resulting from the spectral subtraction, $x_k(f)$ is the frequency signal obtained by fast Fourier transform of the sampled measurement signal and $B_k(f)$ is the noise signal estimated according to the following relation:

$$\left|\hat{B}_k(f)\right| = \frac{1-\lambda}{1-\lambda^k} \sum_{p=1}^{k} \lambda^{k-p} \left|x_p(f)\right|$$

for k > 0 and

$$|\hat{B}_o(f)| = 0$$

for k=0,
where $\lambda$ is a disregard factor between 0 and 1.

3. Apparatus as claimed in one of Claims 1 and 2, **characterised in that** the capture unit (12) includes means for sampling (58, 60) the measurement signal at a frequency at least equal to 20 MHz.

4. Apparatus as claimed. in any one of Claims 1 to 3, **characterised in that** the processing unit (14) also includes a digital filter (78) with finite impulse response for elimination of the low-frequency component of the said digital signal resulting from the conversion of the said measurement signal.

5. Apparatus as claimed in Claim 4, **characterised in that** the said digital filter (78) with finite impulse response is a digital filter with linear phase-shift.

6. Method of detecting an insulation defect in at least one device connected into an electrical power distribution or transmission network and provided with an earthing line (19a, 19b, 19c), in which a leakage current is measured which is travelling along the said earthing line (19a, 19b, 19c) and capable of containing at least one discharge which is internal to the said device and is generated in the presence of an insulation defect, the analogue measurement signal of the leakage current is converted digital measurement signal, the digital measurement signal is compared with a maximum threshold value which is representative of the maximum value of the leakage current permitted to circulate in the said earthing line (19a, 19b, 19c) and an insulation defect signal is generated when the digital measurement signal is greater than the said threshold value, **characterised in that** the measurement signal consists of a useful signal ($S_k$(f)) generated in the presence of an insulation defect internal to the said devices and of an interference signal ($B_k$(f)) generated by the said network, and that the method further includes a step of discriminating, in the insulation defect signal, between a useful signal component ($S_k$(f)) and an interference signal component ($B_k$(f)), subsequent to the step consisting of generating the insulation defect signal, the said step of discriminating consisting of discriminating between the said components by analysis of an electromagnetic coupling factor between the phases of the distribution or transmission network, eliminating within the said insulation defect signal at least one zone corresponding to a voltage peak (V) of the distribution or transmission network, and analysing the difference between the polarity of the insulation defect signal and the sign of the voltage gradient (V) of the distribution or transmission network.

7. Method as claimed in Claim 6, **characterised in that** it also includes a step of increasing the signal/noise ratio in the measurement signal by spectral subtraction of the said measurement signal and of an estimate of the said interference signal ($B_k$(f)), prior to the said step of comparison, the spectral subtraction being carried out according to the following relation:

$$\hat{S}_k(f) = x_k(f) - \hat{B}_k(f),$$

in which $\hat{S}_k(f)$ designates the spectral signal resulting from the spectral subtraction, $x_k$(f) is the frequency signal obtained by fast Fourier transform of the sampled measurement signal and $B_k$(f) is the noise signal estimated according to the following relation:

$$\left|\hat{B}_k(f)\right| = \frac{1-\lambda}{1-\lambda^k} \sum_{p=1}^{k} \lambda^{k-p} \left|x_p(f)\right|$$

for k > 0 and

$$\left|\hat{B}_o(f)\right| = 0$$

for k = 0,
where $\lambda$ is a disregard factor between 0 and 1.

8. Method as claimed in one of Claims 6 and 7, **characterised in that** it also includes a step of eliminating the low-frequency component of the measurement signal by means of a digital filter (78) with finite impulse response and with linear phase-shift, subsequent to the said step of analogue/digital conversion.

_FIG.1_

## FIG.2

_FIG.3_